# FASCICULE DE BREVET EUROPEEN

(11) **EP 0 826 574 B1**
(45) Date de publication et mention de la délivrance du brevet: **30.06.2004**
(21) Numéro de dépôt: 97440072.3
(22) Date de dépôt: 27.08.1997
(51) Int. Cl.: B62D 1/16

(54) **Système de verrouillage axial**
Axial-Verriegelung
Axial locking system

(30) Priorité: 03.09.1996 FR 9610868
(43) Date de publication de la demande: 04.03.1998
(73) Titulaire: Delphi Technologies, Inc., Troy Michigan 48007 (US)
(72) Inventeur: Garin, Gilles, 67100 Strasbourg (FR); Rudolph, Gerd, 55459 Aspisheim (FR); Ullius, Henri, 67270 Schwindratzheim (FR)
(74) Mandataire: Littolff, Denis

(56) Documents cités:
- US-A- 2 257 963
- US-A- 2 501 722
- US-A- 5 042 850
- US-A- 5 435 604

## Description

La présente invention concerne un système de verrouillage axial de l'extrémité d'un élément allongé de type arbre ou colonne dans un élément récepteur de type manchon. Ledit verrouillage doit s'appliquer lorsque le premier élément de type arbre vient s'ajuster axialement dans le second jusqu'à arriver en butée dans ce dernier.

Un système de verrouillage du type défini dans le préambule de la revendication 1 est connu du document US-A-5 435 604.

Pour faciliter la lecture, on se référera dans la suite au domaine préférentiel d'application de l'invention, qui est l'industrie de l'équipement des véhicules automobiles.

Plus spécifiquement, un tel problème de verrouillage axial se rencontre par exemple lorsqu'il y a fixation d'une colonne de direction à un support combinateur disposé entre ladite colonne et le volant. Dans ce cadre, les problèmes à résoudre gravitent en général autour de contraintes aisées à définir :
- Il faut pouvoir monter et démonter ces éléments le plus facilement possible, de préférence à l'aide d'un seul outil, ou même sans outil ;
- Lorsque lesdits éléments sont arrimés l'un à l'autre, il doit y avoir un excellent verrouillage, empêchant tous les mouvements relatifs possibles, et conservant ses caractéristiques mécaniques aussi longtemps que possible dans le temps.

Rapportées à l'exemple précité, ces exigences peuvent s'exprimer de manière moins générique : il s'agit de permettre le montage d'un support combinateur sur un haut de colonne, et de les verrouiller l'un par rapport à l'autre axialement et en rotation, de préférence, quand il existe, par l'intermédiaire d'un organe réglable accessible en face avant du support combinateur, c'est-à-dire celle qui fait face au volant.

Le verrouillage peut également être obtenu automatiquement, c'est-à-dire sans organe réglable, notamment à l'aide d'un dispositif utilisant une force de rappel, selon un principe couramment employé en mécanique.

Il existe d'ailleurs déjà des systèmes de fixation de colonnes de direction à des supports combinateurs utilisant des reliefs situés aux extrémités desdites colonnes, et leur permettant de se clipser dans des lumières prévues à cet effet dans lesdits supports combinateurs. Le principe qui est utilisé est basé sur l'élasticité des matériaux, et donc sur un effet ressort appliqué à des zones en contact, déformées puis rappelées dans leurs positions d'origine dès que cela leur est possible, c'est-à-dire lorsqu'elles sont en face desdites lumières.

Toutefois, dans un système de verrouillage tel que défini auparavant, il importe non seulement que le verrouillage soit effectif après montage, mais encore que le démontage soit possible dans de bonnes conditions.

Avec les systèmes existants mentionnés, le démontage n'est pas facile, car le clipsage de la colonne de direction dans le logement du support combinateur est périphérique, et présente généralement une symétrie de révolution. Il ne peut donc pas être démonté autrement que simultanément sur la totalité de sa périphérie, ce qui peut s'avérer délicat et / ou nécessiter un outil particulier.

En général, dans de telles configurations, le verrouillage axial est en outre réalisé par des moyens qui effectuent dans le même temps un verrouillage en rotation, comme c'est le cas dans la solution existente précitée, d'où la difficulté de procéder au démontage.

Le système de l'invention remédie à ces inconvénients en proposant précisément un système de verrouillage axial indépendant, dont la forme et le positionnement ont été étudiés pour faciliter, voire automatiser le montage d'une colonne de direction dans un support combinateur.

Un autre objectif de l'invention est de permettre un démontage facile des deux éléments.

Un objectif encore est d'améliorer l'accessibilité aux systèmes de commande mécanique permettant le verrouillage et / ou le déverrouillage, lorsqu'ils existent.

Un objectif supplémentaire assuré par l'invention est d'assurer une fonction de guidage au cours du montage, de sorte que l'ajustement entre les deux pièces soit rapide à réaliser et sûr.

Enfin, le système de l'invention garantit une bonne tenue des liaisons mécaniques dans le temps, et procure à ce titre une sécurité accrue.

Bien que l'on s'attache à décrire ces avantages dans le cadre de l'application préférentielle précitée, le système de l'invention s'applique très généralement à toutes les connexions mécaniques du type comprenant des arbres venant se fixer axialement dans des embouts du type manchons d'extrémité.

Le verrouillage axial est réalisé au moyen d'un loquet disposé sur la surface externe du manchon, et pivotant devant une lumière pratiquée dans une paroi du manchon, de sorte qu'il puisse s'insérer, selon l'invention, dans un orifice dudit arbre venant se positionner en face de ladite lumière lorsque l'arbre est en butée dans le manchon, grâce à un système de guidage axial et à un système de verrouillage en rotation permettant à l'orifice de l'arbre de se positionner en face de la lumière du manchon lorsque l'arbre est en butée dans le manchon.

L'existence des deux lumières en vis-à-vis implique un positionnement relatif particulier des éléments au montage. Ce système offre l'unique possibilité d'enfoncement de l'arbre dans le manchon.

Selon une possibilité, ledit système de guidage axial consiste en un ergot placé sur l'arbre et coulissant dans une gorge axiale pratiquée dans la surface interne du manchon, l'ergot et la gorge étant positionnés de telle sorte que ladite lumière et ledit orifice soient en vis-à-vis.

Lorsque les deux ouvertures sont positionnées l'une en face de l'autre, le loquet peut pivoter de manière à s'insérer dans l'orifice de l'arbre pour le bloquer en position verrouillée. Toutefois, ledit loquet coopère avec un dispositif de maintien en position de verrouillage situé sur ledit manchon, une portion du loquet étant alors maintenue dans l'orifice de l'arbre pour l'empêcher de se mouvoir.

Selon une configuration possible, ledit dispositif de maintien comporte une vis dont le serrage conduit à exercer sur le loquet une force provoquant le blocage du loquet en position de verrouillage à l'intérieur de l'orifice de l'arbre.

Une variante plus automatisée, tout au moins au montage, est aussi possible. Dans ce cas, le dispositif de maintien comporte une tige munie d'un ressort rappelant l'extrémité de cette tige au contact du loquet de sorte que la force exercée par ladite extrémité conduise ledit loquet en position de verrouillage à l'intérieur de l'orifice de l'arbre.

Dans les deux cas, ladite force est parallèle à l'axe de l'arbre et s'exerce vers l'ouverture du manchon.

Pour la variante à tige de rappel, le contact entre l'extrémité de cette dernière et le loquet est constant, et il faut par conséquent que la portion du loquet située au voisinage de la zone de contact avec l'extrémité de la tige de rappel comporte une came permettant le déplacement de ladite extrémité lorsqu'on extrait ledit loquet de sa position de verrouillage dans l'orifice de l'arbre. Il y a à ce moment un déplacement relatif des surfaces en contact, qui ne peut être inhibé.

Le système de l'invention s'applique bien entendu à plusieurs types de formes et de volumes, mais selon la configuration la plus répandue, le manchon et l'arbre sont des éléments d'allure cylindrique présentant une symétrie de révolution au moins dans leurs zones de contact.

Dans ce cas, les deux éléments faisant partie de la connexion mécanique sont au surplus dotés d'un système de verrouillage en rotation consistant en des créneaux trapézoïdaux pratiqués à l'extrémité de l'arbre, et venant s'ajuster dans des reliefs correspondants dépassant de la surface interne du manchon.

Avec cette configuration d'allure cylindrique, munie de deux systèmes de verrouillage, axial et en rotation, on se trouve typiquement dans une configuration citée auparavant comme pouvant être une application préférentielle du système de l'invention : ledit manchon est intégré à un support combinateur disposé entre un organe de commande du type volant de .véhicule automobile et une colonne de direction, laquelle constitue l'arbre précité.

Dans la variante à vis de blocage, les exigences tenant à la facilité de montage / démontage impliquent que la tête de ladite vis soit accessible sur la partie du support combinateur faisant face audit volant.

Un tel moyen de commande n'apparaît pas dans la variante à tige de rappel : le montage est automatique, par clipsage puisque le loquet est rappelé dans sa position de verrouillage par la force de rappel du ressort, exercée sur ledit loquet via l'extrémité de la tige autour de laquelle se trouve ledit ressort.

Le loquet comporte dans ce cas une zone destinée à coopérer avec un outil exerçant une force tendant à l'extraire de l'orifice de la colonne de direction, pendant une phase de démontage.

Il suffit que cela soit une surface orientée de telle sorte qu'un outil s'y appliquant, par exemple un tournevis, puisse exercer une force allant contre la force de rappel, induisant un pivotement permettant au loquet de sortir de l'orifice de la colonne et la débloquant.

D'une manière générale, pour les deux variantes précitées, le loquet comporte une périphérie dotée d'au moins trois zones distinctes :
- une zone came au niveau de la surface de contact avec le dispositif de maintien en position de verrouillage ;
- une zone dotée d'un épaulement comportant une surface parallèle à une portion de la zone précédente, mais située de l'autre côté de l'axe de pivotement, ladite surface parallèle étant prévue pour être mise en contact avec le côté de l'orifice de la colonne le plus proche de l'extrémité de ladite colonne ; et
- une zone dotée d'une surface permettant à l'outil de démontage d'exercer une force permettant un pivotement contraire à celui généré par la force de rappel.

Sur le support combinateur, ledit loquet est situé sur la paroi cylindrique externe du manchon, l'axe de pivotement étant perpendiculaire à l'axe de l'arbre.

L'invention va à présent être décrite plus en détail, en référence aux figures annexées, pour lesquelles :
- la figure 1 est une vue en perspective éclatée des éléments essentiels de l'invention, pour la première configuration ;
- la figure 2 reprend ces éléments, représentés assemblés ; et
- la figure 3 représente la variante à dispositif de rappel.

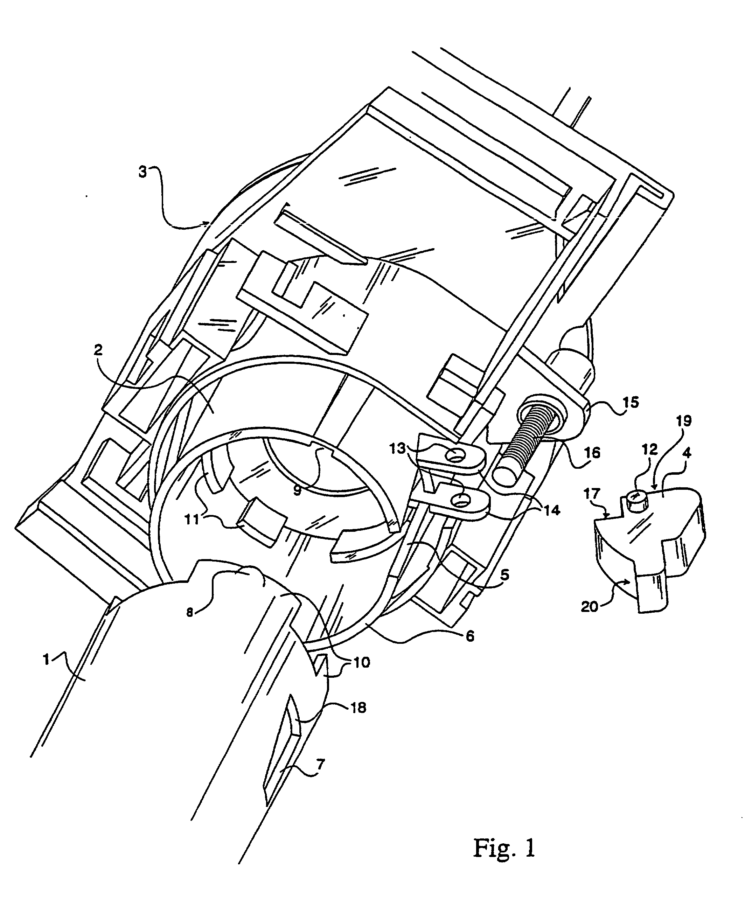

En se référant tout d'abord à la figure 1, la colonne de direction 1 est représentée dans l'axe du manchon 2 rapporté au support combinateur 3, lequel ne sera pas décrit en détail, puisqu'il ne fait pas partie de l'invention proprement dite.

Le loquet 4 est prévu pour pivoter en face de la lumière 5 pratiquée dans la paroi cylindrique 6 du manchon 2. Cette lumière 5 doit être positionnée en regard de l'orifice rectangulaire 7 pratiqué dans la colonne 1, qui vient se placer correctement du fait de l'existence de l'ergot 8 coulissant au montage dans la gorge 9, n'autorisant de ce fait qu'un seul positionnement relatif des deux éléments 1, 2.

L'extrémité de la colonne 1 comporte des créneaux 10 destinés à coopérer avec des reliefs 11 correspondants situés sur la paroi cylindrique interne du manchon 2. Les formes desdits créneaux 10 et reliefs 11 sont prévues légèrement trapézoïdales de manière à faciliter l'insertion et à néanmoins effectuer un verrouillage complet en rotation. Une telle forme permet aussi auxdits reliefs 11 de faire office de butée axiale.

Le loquet 4 comporte une portion d'arbre 12 faisant saillie sur ses deux côtés, destiné à coopérer avec des orifices 13 pratiqués dans des oreilles 14 solidaires de la paroi cylindrique 6 du manchon 2. Le pivotement dudit loquet 4 se produit bien en regard des deux lumières 5, 7 pratiquées dans les parois cylindriques des éléments connectés 1, 2.

Au-dessus desdites oreilles 14, une console 15 sert de support au dispositif de maintien 16 du loquet 14 en position verrouillée, dont les deux variantes envisagées seront étudiées ci-après.

Le fonctionnement du système est le suivant : pour fixer la colonne de direction 1 dans le manchon 2 faisant partie du support combinateur 3, il convient d'insérer l'extrémité crénelée de ladite colonne de façon que l'ergot 8 puisse coulisser dans la gorge 9.

Lorsqu'on parvient en butée, c'est-à-dire lorsque les créneaux trapézoïdaux 10 sont bloqués par les trapèzes inversés formant les reliefs 11 du manchon 2, le loquet 4 peut être inséré par pivotement dans la fenêtre 7 de la colonne de direction 1, pour opérer le blocage de cette dernière dans le support combinateur 3.

Ce blocage, ou verrouillage, est réalisé lorsque l'épaulement 17 est au contact du côté 18 de l'orifice 7. Dans ce cas, la force axiale exercée contre la surface plane 19, en direction de l'ouverture du manchon 2, par le dispositif 16, est transformée en une force de même direction et de sens inverse s'appliquant , au niveau de l'épaulement 17, sur ledit côté 18 de l'orifice 7, et empêchant tout mouvement axial de la colonne de direction 1. Le couple de force s'exerce de part et d'autre de l'axe 12.

La zone 20 du loquet 4 peut enfin être utilisée pour agir contre la force de rappel, si elle s'applique, de manière à faire pivoter ledit loquet 4 en sens inverse du sens de blocage, pour déverrouiller l'ensemble colonne 1 /- manchon 2.

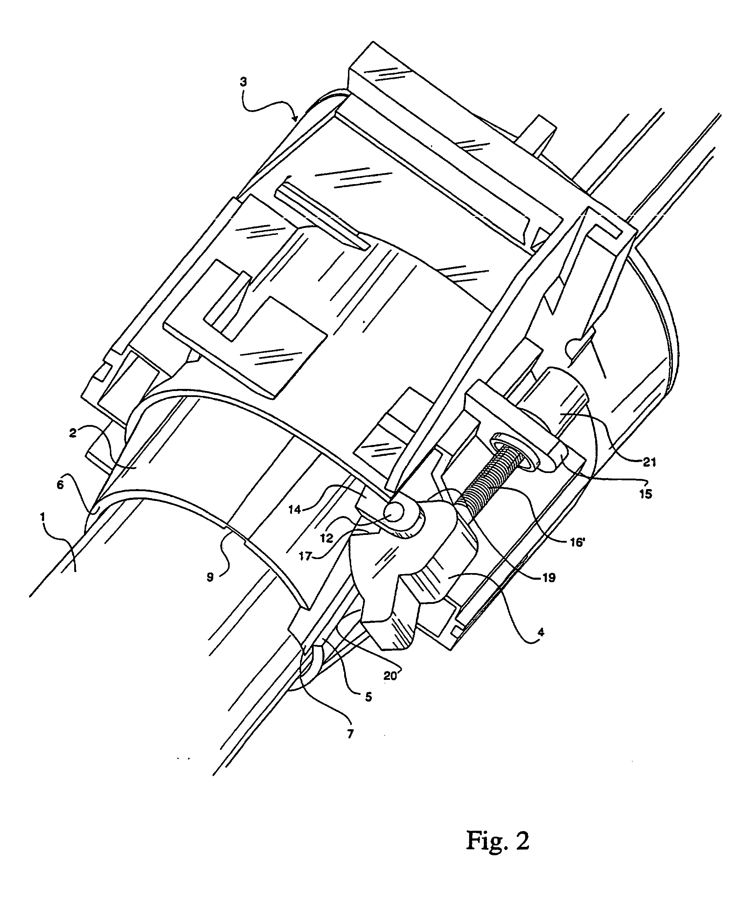

La figure 2 représente une des deux variantes dans laquelle une vis 16' de type vis - pointeau exerce une action contre ladite surface 19. Dans ce cas, le serrage de ladite vis 16', effectué au niveau de sa tête 21, permet par action sur la surface 19 d'exercer une action de sens contraire via la surface parallèle 17 située au contact de l'orifice 7. Le démontage se fait très simplement en desserrant la vis 16', ce qui donne une liberté de mouvement rotatif, même limité, audit loquet 4.

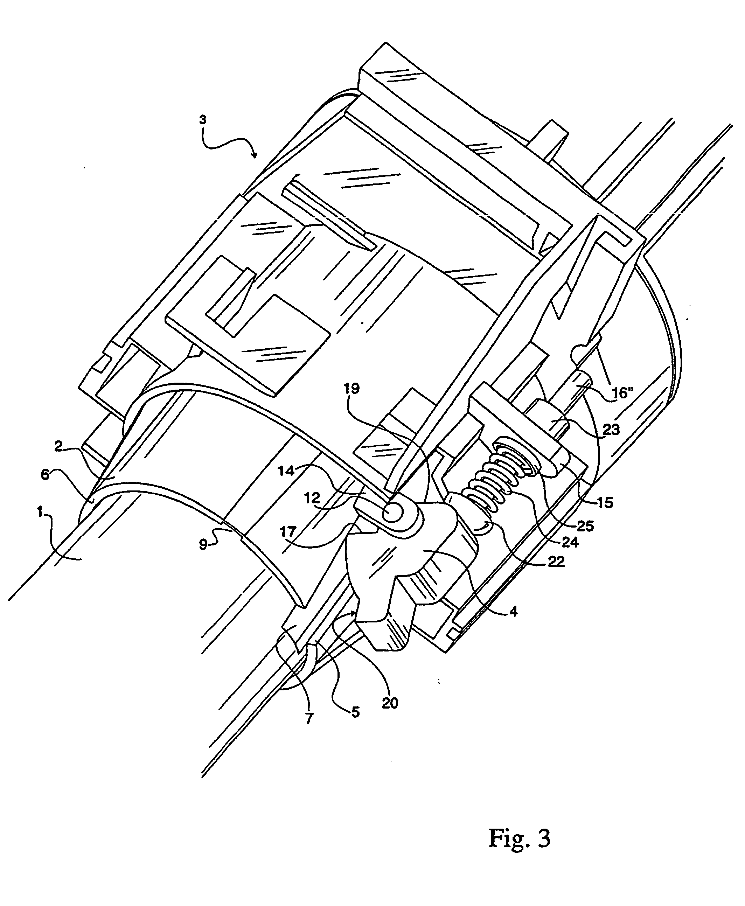

Dans cette vue, ainsi que dans la figure 3, le loquet 4 est représenté en cours de pivotement, c'est-à-dire que la surface 17 n'est pas encore en contact avec le côté supérieur de l'orifice 7, et le verrouillage n'est donc pas encore effectif.

En figure 3, la vis 16' est remplacée par une variante à tige 16" entourée d'un ressort 24 reposant à ses deux extrémités respectivement contre la surface inférieure de la console 15 et contre une pièce d'extrémité 22 présentant une surface d'appui. Au niveau de la console 15, un muret circulaire 25 permet le guidage dudit ressort 24.

En réalité, cette configuration pourrait n'être simplement qu'une vis dont la tête 22 sert de pièce de contact, le corps 16" guidant et maintenant le ressort 24 en translation, ladite vis étant limitée en translation par l'écrou 23. Ceci permet en outre un réglage de la course possible, et donc de la force de rappel exercée.

L'action exercée par ce dispositif est identique à celle que l'on a décrit auparavant. Pour démonter le haut de colonne, et donc inhiber le verrouillage, il suffit d'exercer une action radiale vers l'extérieur sur la zone référencée 20. La came comporte une zone arrondie 26 qui permet de repousser le ressort 24 et la tige 16".

La pièce d'extrémité 22 est également d'allure arrondie de manière à coopérer dans les meilleures conditions avec la portion 26 du loquet 4. Un simple outil à lame permet de faire pivoter ledit loquet 4 de manière à extraire la zone 17 de la fenêtre 7 de la colonne de direction 1.

Les formes des divers composants décrits ci-dessus ne sont que des exemples illustratifs, et ne sont pas limitatifs de l'invention, qui englobe au contraire les variantes à la portée de l'homme de l'art et contenues dans le domaine de protection des revendications annexées.

## Revendications

1. Système de verrouillage axial de l'extrémité d'un arbre 1 dans un manchon 2, ledit arbre 1 venant s'ajuster axialement dans ledit manchon 2 jusqu'à une position en butée dans laquelle les deux éléments 1, 2 précités sont solidarisés l'un à l'autre, ledit verrouillage axial étant réalisé au moyen d'un loquet 4 disposé sur la surface externe du manchon 2, et pivotant devant une lumière 5 pratiquée dans une paroi 6 du manchon, **caractérisé en ce que** le loquet 4 s'insère dans un orifice 7 dudit arbre 1 venant se positionner en face de ladite lumière 5 lorsque l'arbre 1 est en butée dans le manchon 2, grâce à un système de guidage axial (8,9) et à un système de verrouillage en rotation (10,11) permettant à l'orifice 7 de l'arbre 1 de se positionner en face de la lumière 5 du manchon 2 lorsque l'arbre 1 est en butée dans le manchon 2.

2. Système de verrouillage axial selon la revendication 1, **caractérisé en ce que** ledit système de guidage axial consiste en un ergot 8 placé sur l'arbre 1 et coulissant dans une gorge axiale 9 pratiquée dans la surface interne du manchon 2, l'ergot 8 et la gorge 9 étant positionnés de telle sorte que ladite lumière 5 et ledit orifice 7 soient en vis-à-vis.

3. Système de verrouillage axial selon l'une des revendications précédentes, **caractérisé en ce que** ledit loquet 4 coopère avec un dispositif de maintien 16 en position de verrouillage situé sur ledit manchon 2, une portion du loquet 4 étant alors maintenue dans l'orifice 7 de l'arbre 1 pour l'empêcher de se mouvoir.

4. Système de verrouillage axial selon la revendication précédente, **caractérisé en ce que** ledit dispositif de maintien 16 comporte une vis 16' dont le serrage conduit à exercer sur le loquet 4 une force provoquant le blocage du loquet 4 en position de verrouillage à l'intérieur de l'orifice 7 de l'arbre 1.

5. Système de verrouillage axial selon la revendication 3, **caractérisé en ce que** ledit dispositif de maintien 16 comporte une tige 16" munie d'un ressort 24 rappelant l'extrémité 22 de cette tige 16" au contact du loquet 4 de sorte que la force exercée par ladite extrémité 22 conduise ledit loquet 4 en position de verrouillage à l'intérieur de l'orifice 7 de l'arbre 1.

6. Système de verrouillage axial selon l'une des revendications 4 et 5, **caractérisé en ce que** ladite force est parallèle à l'axe de l'arbre 1 et s'exerce vers l'ouverture du manchon 2.

7. Système de verrouillage axial selon l'une des revendications 5 et 6, **caractérisé en ce que** la portion 19 du loquet 4 située au voisinage de la zone de contact avec l'extrémité 22 de la tige 16" de rappel comporte une came permettant le déplacement de ladite extrémité 22 lorsqu'on extrait ledit loquet 4 de sa position de verrouillage dans l'orifice 7 de l'arbre 1, par glissement sur la surface 19 dudit loquet 4.

8. Système de verrouillage axial selon l'une quelconque des revendications précédentes, **caractérisé en ce que** ledit manchon 2 et ledit arbre 1 sont des éléments d'allure cylindrique présentant une symétrie de révolution au moins dans leurs zones de contact.

9. Système de verrouillage axial selon la revendication 8, **caractérisé en ce que** lesdits éléments comportent un système de verrouillage en rotation consistant en des créneaux trapézoïdaux 10 pratiqués à l'extrémité de l'arbre 1, et venant s'ajuster dans des reliefs 11 correspondants dépassant de la surface interne du manchon 2.

10. Système de verrouillage axial selon l'une quelconque des revendications précédentes, **caractérisé en ce que** ledit manchon 2 est intégré à un support combinateur 3 disposé entre un organe de commande du type volant de véhicule automobile et une colonne de direction, laquelle constitue ledit arbre 1.

11. Système de verrouillage axial selon la revendication 10, **caractérisé en ce que** la tête 21 de ladite vis 16' est accessible sur la partie du support combinateur 3 faisant face audit volant.

12. Système de verrouillage axial selon l'une des revendications 5, 6 et 10, **caractérisé en ce que** ledit loquet 4 comporte une zone 20 destinée à coopérer avec un outil exerçant une force tendant à l'extraire de l'orifice 7 de la colonne de direction 1, pendant une phase de démontage.

13. Système de verrouillage selon l'une quelconque des revendications précédentes, **caractérisé en ce que** le loquet 4 comporte une périphérie dotée d'au moins trois zones distinctes :
- une zone came 19 au niveau de la surface de contact avec le dispositif de maintien 16 en position de verrouillage ;
- une zone dotée d'un épaulement 17 comportant une surface parallèle à une portion de la zone 19 précédente, mais située de l'autre côté de l'axe de pivotement 12, ladite surface parallèle étant prévue pour être mise en contact avec le côté de l'orifice 7 de la colonne 1 le plus proche de l'extrémité de ladite colonne 1 ; et
- une zone 20 dotée d'une surface permettant à l'outil de démontage d'exercer une force générant un pivotement contraire à celui généré par la force de rappel.

14. Système de verrouillage selon l'une des revendications précédentes, **caractérisé en ce que** le loquet 4 est situé sur la paroi cylindrique 6 externe du manchon 2, l'axe de pivotement 12 étant perpendiculaire à l'axe de l'arbre 1.

## Patentansprüche

1. System zur Axialverriegelung des Endes einer Welle 1 in einer Muffe 2, wobei sich die Welle 1 axial in der Muffe 2 bis zur einer Stellung im Anschlag anpasst, in der die zwei oben genannten Elemente 1, 2 fest miteinander verbunden sind, wobei die Axialverriegelung mittels eines Riegels 4 durchgeführt wird, der auf der äußeren Fläche der Muffe 2 angeordnet ist, und vor einem in einer Wand 6 der Muffe eingerichteten Langloch 5 schwenkt, **dadurch gekennzeichnet, dass** sich der Riegel 4 in eine Öffnung 7 der Welle 1 fügt, die sich, wenn sich die Welle 1 im Anschlag in der Muffe 2 befindet, gegenüber dem Langloch 5 dank eines axialen Führungssystems (8, 9) und eines Verriegelungssystems in Drehung (10, 11) positioniert, die es der Öffnung 7 der Welle erlauben, sich gegenüber dem Langloch 5 der Muffe 2 zu positionieren, wenn sich die Welle 1 in der Muffe 2 im Anschlag befindet.

2. Axialverriegelungssystem nach Anspruch 1, **dadurch gekennzeichnet, dass** das axiale Führungssystem aus einem Dorn 8 besteht, der auf der Welle 1 platziert ist und in einer axialen Hohlkehle 9 gleitet, die in der inneren Fläche der Muffe 2 eingerichtet ist, wobei der Dorn 8 und die Hohlkehle 2 so positioniert sind, dass das Langloch 5 und die Öffnung 7 einander gegenüber liegen.

3. Axiales Verriegelungssystem nach einem der vorhergehenden Ansprüche, **dadurch gekennzeichnet, dass** der Riegel 4 mit einer Vorrichtung 16 zum Halten in Position der Verriegelung auf der Muffe 2 zusammenwirkt, wobei ein Teil des Riegels 4 daher in der Öffnung 7 der Welle 1 gehalten wird, um ihn daran zu hindern, sich zu bewegen.

4. Axiales Verriegelungssystem nach dem vorhergehenden Anspruch, **dadurch gekennzeichnet, dass** die Haltevorrichtung 16 eine Schraube 16' umfasst, deren Festziehen dazu führt, auf den Riegel 4 eine Kraft auszuüben, die das Blockieren des Riegels 4 in der im Inneren der Öffnung 7 der Welle 1 verriegelten Position bewirkt.

5. Axiales Verriegelungssystem nach Anspruch 3, **dadurch gekennzeichnet, dass** die Haltevorrichtung 16 einen Schaft 16" umfasst, der mit einer Feder 24 versehen ist, die das Ende 22 dieses Schafts 16" in Berührung mit dem Riegel 4 so zurückholt, dass die vom Ende 22 ausgeübte Kraft den Riegel 4 in Verriegelungsstellung im Inneren der Öffnung 7 der Welle 1 führt.

6. Axialverriegelungssystem nach einem der Ansprüche 4 und 5, **dadurch gekennzeichnet, dass** die Kraft zur Achse der Welle 1 parallel ist und zur Öffnung der Muffe 2 hin wirkt.

7. Axialverriegelungssystem nach einem der Ansprüche 5 und 6, **dadurch gekennzeichnet, dass** der Teil 19 des Riegels 4, der in der Nähe der Berührungszone mit dem Ende 22 des Rückholschafts 16" liegt, einen Nocken umfasst, der das Bewegen des Endes 22 erlaubt, wenn man den Riegel 4 aus seiner Verriegelungsstellung in der Öffnung 7 der Welle 1 durch Gleiten auf der Oberfläche 19 des Riegels 4 herauszieht.

8. Axialverriegelungssystem nach einem der vorhergehenden Ansprüche, **dadurch gekennzeichnet, dass** die Muffe 2 und die Welle 1 Elemente zylindrischer Form sind, die eine Umlaufsymmetrie zumindest in ihren Berührungszonen aufweisen.

9. Axialverriegelungssystem nach Anspruch 8, **dadurch gekennzeichnet, dass** die Elemente ein System zur Verriegelung in Drehung umfassen, das aus trapezförmigen Lücken 10 besteht, die am Ende der Welle 1 eingerichtet sind und sich in entsprechende Reliefs 11 fügen, die aus der inneren Fläche der Muffe 2 herausstehen.

10. Axialverriegelungssystem nach einem der vorhergehenden Ansprüche, **dadurch gekennzeichnet, dass** die Muffe 2 in einen kombinierenden Träger 3 eingebaut ist, der zwischen einem Steuerorgan des Typs Automobillenkrad und einer Lenkungssäule, die die Welle 1 bildet, angeordnet ist.

11. Axialverriegelungssystem nach Anspruch 10, **dadurch gekennzeichnet, dass** der Kopf 21 der Schraube 16' auf dem Teil des kombinierenden Trägers 3 zugänglich ist, der dem Lenkrad gegenüber liegt.

12. Axialverriegelungssystem nach einem der Ansprüche 5, 6 und 10, **dadurch gekennzeichnet, dass** der Riegel 4 eine Zone 20 umfasst, die dazu bestimmt ist, mit einem Werkzeug zusammenzuarbeiten, das eine Kraft ausübt, die dazu tendiert, ihn während einer Demontagephase aus der Öffnung 7 der Lenksäule 1 herauszuziehen.

13. Verriegelungssystem nach einem der vorhergehenden Ansprüche, **dadurch gekennzeichnet, dass** der Riegel 4 eine Peripherie aufweist, die mit mindestens drei getrennten Zonen versehen ist:
- eine Nockenzone 19 auf der Ebene der Berührungsfläche mit der Haltevorrichtung 16 in Verriegelungsstellung;
- eine Zone, die mit einem Ansatz 17 versehen ist, der eine Fläche parallel zu einem Teil der vorhergehenden Zone 19 umfasst, die sich jedoch auf der anderen Seite der Schwenkachse 12 befindet, wobei die parallele Fläche dazu vorgesehen ist, mit der Seite der Öffnung 7 der Lenksäule 1, die dem Ende der Lenksäule 1 am nähesten ist, in Berührung gebracht zu werden; und
- eine Zone 20, die mit einer Fläche versehen ist, die es dem Demontagewerkzeug erlaubt, eine Kraft auszuüben, die ein Schwenken erzeugt, das zu der von der Rückholkraft ausgeübten entgegengesetzt ist.

14. Verriegelungssystem nach einem der vorhergehenden Ansprüche, **dadurch gekennzeichnet, dass** sich der Riegel 4 auf der zylindrischen äußeren Wand 6 der Muffe 2 befindet, wobei die Schwenkachse 12 zur Achse der Welle 1 senkrecht steht.

## Claims

1. System for axially locking the end of a shaft 1 into a sleeve 2, said shaft 1 coming to fit axially in said sleeve 2 to an abutment position wherein the two said elements 1, 2 are fixedly attached to one another, said axial locking being effected by means of a latch 4 disposed on the outer surface of the sleeve 2, and pivoting in front of a slot 5 provided in a wall 6 of the sleeve, **characterised in that** the latch 4 is inserted into an orifice 7 of said shaft 1 coming to be located facing said slot 5 when the shaft 1 is in abutment in the sleeve 2 owing to an axial guiding system (8, 9) and to a rotational locking system (10, 11) permitting the orifice 7 of the shaft 1 to be located facing the slot 5 of the sleeve 2 when the shaft 1 is in abutment in the sleeve 2.

2. Axial locking system as claimed in Claim 1, **characterised in that** said axial guiding system consists of a lug 8 placed on the shaft 1 and sliding in an axial recess 9 provided in the inner surface of the sleeve 2, the lug 8 and the recess 9 being located such that said slot 5 and said orifice 7 are facing each other.

3. Axial locking system as claimed in any one of the preceding Claims, **characterised in that** said latch 4 co-operates with a holding device 16 in the locking position located on said sleeve 2, a portion of the latch 4 thus being held in the orifice 7 of the shaft 1 to prevent it from moving.

4. Axial locking system as claimed in the preceding Claim, **characterised in that** said holding device 16 comprises a screw 16' which exerts a force on the latch 4 when it is tightened, which force causes the latch 4 to be kept in the locking position within the orifice 7 of the shaft 1.

5. Axial locking system as claimed in Claim 3, **characterised in that** said holding device 16 comprises a rod 16" provided with a spring 24 biassing the end 22 of this rod 16" into contact with the latch 4 such that the force exerted by said end 22 drives said latch 4 into the locking position within the orifice 7 of the shaft 1.

6. Axial locking system as claimed in any one of Claims 4 and 5, **characterised in that** said force is in parallel with the axis of the shaft 1 and is exerted in the direction of the opening of the sleeve 2.

7. Axial locking system as claimed in any one of Claims 5 and 6, **characterised in that** the portion 19 of the latch 4 located in proximity to the area in contact with the end 22 of the biassing rod 16" comprises a cam enabling said end 22 to move when said latch 4 is removed from its locking position within the orifice 7 of the shaft 1 by sliding on the surface 19 of said latch 4.

8. Axial locking system as claimed in any one of the preceding Claims, **characterised in that** said sleeve 2 and said shaft 1 are cylindrical elements which have a rotational symmetry at least in their contact areas.

9. Axial locking system as claimed in Claim 8, **characterised in that** said elements have a rotational locking system consisting of trapezoidal notches 10 provided on the end of the shaft 1 and coming to fit in corresponding raised portions 11 projecting from the inner surface of the sleeve 2.

10. Axial locking system as claimed in any one of the preceding Claims, **characterised in that** said sleeve 2 is integrated in a combinatory support 3 disposed between a control member, which is of the automobile steering wheel type, and a steering column which constitutes said shaft 1.

11. Axial locking system as claimed in Claim 10, **characterised in that** the head 21 of said screw 16' is accessible on the part of the combinatory support 3 which faces said steering wheel.

12. Axial locking system as claimed in any one of Claims 5, 6 and 10, **characterised in that** said latch 4 has an area 20 intended to co-operate with a tool exerting a force tending to remove the latch from the orifice 7 of the steering column 1 during disassembly.

13. Locking system as claimed in any one of the preceding Claims, **characterised in that** the periphery of the latch 4 is provided with a least three distinct areas:
- a cam area 19 at the surface in contact with the holding device 16 in the locking position;
- an area provided with a shoulder 17 having a surface in parallel with a portion of the preceding area 19, but located on the other side of the pivoting axle 12, said parallel surface being provided so as to be brought into contact with the side of the orifice 7 of the column 1 which is closest to the end of said column 1; and
- an area 20 provided with a surface enabling the disassembly tool to exert a force generating a pivoting motion which is the reverse of the pivoting motion generated by the biassing force.

14. Locking system as claimed in any one of the preceding Claims, **characterised in that** the latch 4 is located on the outer cylindrical wall 6 of the sleeve 2, the pivoting axle 12 being perpendicular to the axis of the shaft 1.
